# FASCICULE DE BREVET EUROPEEN

(11) **EP 0 705 163 B1**
(45) Date de publication et mention de la délivrance du brevet: **12.03.1997**
(21) Numéro de dépôt: 94918391.7
(22) Date de dépôt: 07.06.1994
(51) Int. Cl.: B29D 30/08, B29D 30/34

(54) **PROCEDE DE FABRICATION D'UN PNEUMATIQUE A ARMATURE DE CARCASSE, FORMEE D'AU MOINS UNE NAPPE DE FILS OU CABLES**
VERFAHREN ZUR HERSTELLUNG EINES REIFENS MIT EINER AUS MINDENSTENS EINEM FADENGEWEBE ODER SEILGEWEBE HERGESTELLTEN KARKASSE
PROCESS FOR PRODUCING A TIRE WITH A CASING REINFORCEMENT OF AT LEAST ONE PLY OF WIRES OR CABLES

(30) Priorité: 25.06.1993 FR 9307879
(43) Date de publication de la demande: 10.04.1996
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: BILLIERES, Jean, F-63100 Clermont-Ferrand (FR)
(74) Mandataire: Devaux, Edmond-Yves
(86) Numéro de dépôt international: EP9401841
(87) Numéro de publication internationale: WO9500322

(56) Documents cités:
- EP-A- 0 481 805
- DE-A- 1 579 162
- DE-A- 2 064 753
- US-A- 3 218 209
- US-A- 3 975 490

## Description

L'invention concerne un procédé de fabrication d'un pneumatique comportant au moins une armature de carcasse constituée de nappes de fils ou câbles, et plus particulièrement un procédé de confection de l'ébauche toroïdale du pneumatique.

Le procédé le plus couramment employé pour fabriquer une enveloppe de pneumatique pour roue de véhicule consiste essentiellement, dans un premier temps, à appliquer l'une après l'autre autour d'un tambour cylindrique de confection, les diverses couches de mélanges caoutchouteux et les différentes nappes de fils ou câblés qui constitueront l'armature de carcasse de l'ébauche toroïdale de pneumatique non vulcanisée et du pneumatique lui-même ; lesdites nappes de carcasse étant, dans la majorité des cas, ancrées à chaque extrémité axiale du tambour à un renfort métallique annulaire ou tringle.

Dans le cas de pneumatique à armature de carcasse formée de nappes de fils ou câbles croisés, la seconde étape consiste à appliquer sur la zone centrale de l'ébauche cylindrique non vulcanisée de carcasse les nappes éventuelles d'armature de renforcement de la bande de roulement, ou nappes d'armature de sommet, formées de fils ou câbles en général croisés d'une nappe à la suivante. Après pose de ladite armature et sur cette dernière, pose de la bande de roulement, la dernière étape de fabrication de l'ébauche toroïdale consiste à lui donner avant vulcanisation la forme d'un tore très proche de celle du pneumatique terminé. Cette opération appelée conformation de l'ébauche cylindrique est réalisée soit sur un tambour de conformation, soit dans le moule de vulcanisation lui-même.

Dans le cas d'un pneumatique à armature de carcasse radiale, la seconde étape consiste à transformer par conformation l'ébauche cylindrique non vulcanisée de carcasse en ébauche toroïdale non vulcanisée, et la dernière étape consistant alors à poser sur la partie centrale de l'ébauche toroïdale une armature de sommet, les couches de mélanges caoutchouteux nécessaires et en particulier la bande de roulement.

Malgré le soin apporté à l'exécution de toutes les opérations décrites, malgré les nombreux contrôles réalisés sur les produits de départ, sur les produits semi-finis, sur l'ébauche toroïdale terminée, malgré les nombreux contrôles sur les machines de fabrication et sur les étapes de fabrication, les contrôles exercés sur les pneumatiques vulcanisés, terminés, mettent en évidence l'apparition d'un certain nombre d'anomalies en ce qui concerne le positionnement des produits, affectant en particulier la zone basse, anomalies ne trouvant pas d'explications satisfaisantes. En outre, et comme connu, de tels procédés nécessitent avant leur assemblage la fabrication séparée des nappes de fils ou câbles à l'aide de machines importantes, et avec un nombre d'opérations élevées, et sont donc coûteux.

Afin de remédier aux inconvénients cités ci-dessus, c'est-à-dire d'améliorer la qualité du pneumatique terminé et de diminuer les coûts de fabrication dudit pneumatique, conformément à l'invention un nouveau procédé de fabrication d'un pneumatique est basé sur le principe selon lequel les zones de flanc et les zones des bourrelets de l'ébauche doivent être confectionnées et manipulées dans la même configuration géométrique que celle qu'elles auraient dans le moule de vulcanisation.

On peut utiliser pour la confection d'une armature de carcasse l'enroulement hélicoïdal d'un fil ou câble sur un noyau annulaire pliable et/ou démontable, suivi d'une coupure du tore ainsi formé et enlèvement de l'ébauche toroïdale d'armature du noyau de confection. Un tel mode de fabrication est décrit dans le brevet US 1 316 104.

Le brevet US 3,975,490 décrit une méthode de fabrication d'un pneumatique en deux ou trois parties. Si le pneumatique est en trois parties, deux parties renforcées et prémoulées comprennent les bourrelets, les flancs et les bandes armées, support de la bande de roulement, la troisième partie étant la bande de roulement elle-même. Ce brevet mentionne la possibilité de confectionner les deux parties renforcées par enroulement autour d'un noyau torique, à section circulaire, de bandes tissées caoutchoutées, et de séparer ladite ébauche en deux sections par coupures. D'énormes difficultés se présentent pour réaliser les renforcements, en particulier des bandes armées par enroulement, pour réaliser les coupures de l'ébauche ainsi confectionnée et pour obtenir précisément des bandes années pouvant s'interpénétrer après prévulcanisation, pour éviter déplacements et déformations lors des manutentions des parties flancs du pneumatique.

Il en est de même dans le brevet FR 1 214 908 où l'armature est obtenue par enroulement sur un mandrin démontable d'une couche de mélange caoutchouteux puis d'une couche de câbles d'acier, la largeur mesurée entre les emplacements des tringles métalliques étant approximativement égale à deux fois la largeur de chaque partie de nappe nécessaire pour être retournée autour des tringles d'ancrage de la future armature de carcasse.

La demande allemande 1 934 018 décrit pratiquement le même procédé, consistant à enrouler hélicoïdalement sur une forme un fil ou câble continu, cet enroulement étant coupé circonférentiellement sur la face radialement intérieure de la forme afin de pouvoir retourner autour des tringles une partie de l'enroulement et ainsi réaliser l'armature de carcasse avec ses retournements.

Les procédés décrits ci-dessus utilisent des formes, noyaux ou mandrins pouvant être rigides ou non, mais dans tous les cas déformables parce qu'ils sont soit pliables, soit démontables et ce pour pouvoir être retirés des ébauches toroïdales d'armature. Outre que ces formes ou noyaux sont de fabrication malaisée et coûteuse, ils sont aussi d'utilisation difficile car nécessitant une certaine manutention, manutention ayant pour conséquence des déplacements et déformations néfastes des zones de flancs et de bourrelets, zones par définition les plus fragiles de l'ébauche non vulcanisée de pneumatique.

En outre, ces formes ou noyaux n'assurent pas dans tous les cas une parfaite régularité de la surface de pose et en conséquence de la forme des produits posés. En effet, les pièces de montage de la forme s'assemblent de manière de moins en moins précise en fonction de la durée d'utilisation de la forme. L'utilisation de telles formes entraîne alors des défauts d'uniformité sur le pneumatique vulcanisé tout aussi gênants que le mauvais positionnement des produits.

Afin de remédier à de tels inconvénients, et en particulier d'éviter toute distorsion entre l'ébauche d'armature de carcasse telle qu'elle est sur le noyau et telle qu'elle sera dans le moule de vulcanisation, le procédé, conforme à l'invention, pour réaliser une ébauche toroïdale de pneumatique non vulcanisé consiste :
a) à recouvrir ledit noyau d'au moins une couche de mélange caoutchouteux destiné à enrober les fils ou câbles d'armature
b) à réaliser une ébauche toroïdale d'armature de carcasse, par enroulement, d'un fil ou câble continu autour d'un noyau ou forme annulaire indéformable, monobloc, indémontable, possédant une section méridienne dont le profil, au moins en ce qui concerne ses flancs, est parallèle au profil méridien des flancs de la nappe d'armature de carcasse la plus intérieure, tel qu'il sera dans le moule de vulcanisation ;
c) à poser sur ladite ébauche, les couches et profilés de mélanges caoutchouteux de recouvrement de l'armature de carcasse ;
d) à couper circonférentiellement l'ébauche d'armature de carcasse d'une part au moins une fois sur la surface radialement intérieure, d'autre part au moins une fois sur la surface radialement extérieure du noyau ;
e) à séparer axialement les deux moitiés de l'ébauche afin de pouvoir enlever le noyau de confection, séparation réalisée à l'aide de moyens qui sont simultanément de préhension, de support et de manutention, et ayant des parois axialement intérieures présentant un profil méridien identique au profil méridien de la nappe d'armature de carcasse la plus extérieure, recouverte éventuellement des couches et profils de mélange caoutchouteux nécessaires, cette identité ayant lieu au moins dans la zone des flancs telle que définie ci-dessus ;
f) à rapprocher axialement lesdites moitiés et à les réunir ;
g) à compléter l'ébauche de pneumatique avant mise dans le moule de vulcanisation.

Il faut entendre par ébauche toroïdale d'armature de carcasse l'ensemble formé par les câbles ou fils et les couches dites de calandrage destinées à enrober les câbles ou fils, ladite ébauche pouvant être à l'état cru ou à l'état prévulcanisé.

Il faut entendre par profil méridien des flancs de la nappe d'armature de carcasse le profil méridien de ladite armature entre les points de tangence respectivement avec les tringles d'ancrage et l'armature de sommet.

Les moyens de préhension, de support et de manutention de l'ébauche d'armature de carcasse sont préférentiellement des couronnes métalliques annulaires coaxiales, certaines de ces couronnes dites de flanc étant destinées au support, à la préhension et à la manutention des flancs de l'armature formée sur le noyau de confection, ces certaines couronnes de flanc étant jointes radialement à l'extérieur à deux couronnes dites de sommet destinées au support, à la préhension et à la manutention du sommet d'armature de carcasse.

Ces couronnes de flanc et de sommet sont pourvues de cavités d'aspiration munies de soupapes, ces cavités ayant des lèvres de caoutchouc de manière à ne pas blesser l'armature de carcasse, cette dernière étant alors maintenue à l'intérieur des couronnes par aspiration, par succion.

Ces moyens sont avantageusement appliqués sur l'ébauche d'armature de carcasse, confectionnée sur le noyau, avant la réalisation des coupures circonférentielles. Il en est de même de la pose des tringles d'ancrage de l'armature de carcasse, qui est réalisée au moyen des couronnes de flanc, munies à leurs bases d'évidements destinés à recevoir lesdites tringles, ces évidements étant pourvus sur leurs périphéries d'aimants de maintien des tringles. Quant au rabattement des portions d'armature de carcasse destinées à constituer les retournements de ladite armature, il est préférentiellement réalisé après écartement axial des deux moitiés d'ébauche et enlèvement du noyau. Rabattre autour des tringles d'ancrage lesdites portions d'armature signifie que ces portions initialement disposées axialement à l'intérieur des tringles d'ancrage sont par rotation de 180° autour desdites tringles disposées axialement à l'extérieur en restant parallèles à l'axe de rotation du noyau.

Quant à la réunion des deux moitiés de l'ébauche, elle peut être faite par l'apport d'au moins une nappe de renforcement supplémentaire recouvrant les deux bords de l'armature de carcasse, ou par simple jonction bout à bout des deux extrémités, ou par recouvrement l'un sur l'autre des deux bords supérieurs de l'armature de carcasse, ou encore par un recouvrement, par au moins une nappe, de la jonction bord à bord ou du recouvrement des deux bords.

Le rabattement des portions d'armature de carcasse destinées à constituer les retournements de ladite armature est suivi du maintien en position horizontale de ces retournements, ce maintien étant avantageusement assuré soit par aspiration au moyen de cavités d'aspiration placées sous les faces intérieures des couronnes de flanc, soit en l'absence desdites couronnes par la présence de deux tambours coaxiaux, la distance axiale entre leurs faces axialement intérieures pouvant être variable.

Il est avantageux, conformément à l'invention, que la pose de l'armature de sommet et de la bande de roulement se fasse à l'aide d'un complexe préfabriqué et formé des deux éléments. De même, la pose dudit complexe sur le sommet de l'ébauche d'armature de carcasse se réalise préférentiellement alors que les flancs de l'armature de carcasse sont toujours maintenus par les couronnes dites de flanc, ce maintien permettant la parfaite stabilité de l'armature de carcasse et des tringles d'ancrage au cours du procédé de fabrication.

Il en est de même de la pose des couches et profilés ce mélanges caoutchouteux destinés à former l'intérieur du pneumatique, c'est-à-dire les couches et/ou profilés disposés axialement et radialement à l'intérieur de l'armature de carcasse calandrée, cette pose se faisant préférentiellement, les couronnes de flanc étant maintenues en place sur l'armature de carcasse.

L'invention sera mieux comprise à l'aide du dessin annexé à la description qui suit et qui illustre des exemples non limitatifs, dessin sur lequel
- la figure 1 représente une première variante de l'ébauche de l'armature de carcasse telle que vue en section méridienne dans le moule de vulcanisation ;
- la figure 2 représente l'ébauche d'armature de carcasse de la figure 1, vue en section méridienne sur le noyau de confection ;
- la figure 3 représente l'ébauche d'armature de carcasse de la figure 2 sur laquelle ont été posés les moyens de préhension, manutention et support ;
- la figure 4 représente l'ébauche d'armature de carcasse après raccordement des parties supérieures de ladite armature et pose du complexe armature de sommet - bande de roulement ;
- la figure 5 représente l'ébauche de pneumatique terminée avant mise dans le moule de vulcanisation ;
- la figure 6 représente une deuxième variante de l'ébauche d'armature de carcasse, sur laquelle sont posés les moyens de préhension, manutention et support des flancs.

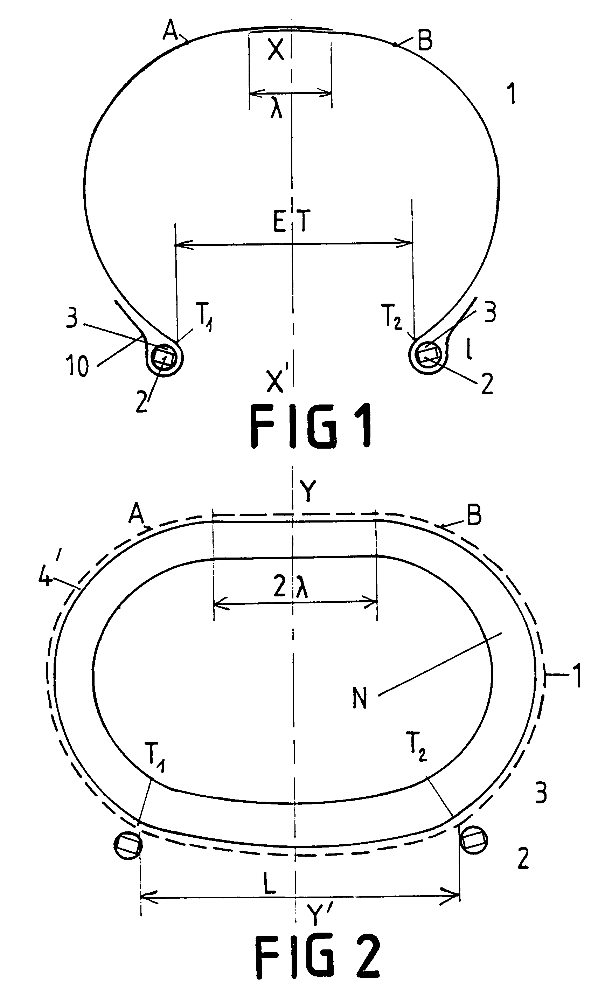

Sur la figure 1 est montrée une section méridienne de l'armature de carcasse (1) d'un pneumatique à fabriquer, cette section méridienne étant vue dans le moule de vulcanisation du pneumatique. L'armature de carcasse (1) est formée de deux parties qui se recouvrent au niveau du plan équatorial XX' du pneumatique suivant une largeur de recouvrement λ. Le profil méridien de l'armature (1) peut être décomposé en trois parties fondamentales : une partie médiane AB de faible courbure transversale et où les profils méridiens respectivement de l'armature de carcasse (1) et de l'armature de sommet (non montrée) sont parallèles entre eux, les points A et B étant précisément les points de tangence du profil méridien d'armature de carcasse avec le profil méridien de l'armature de sommet. Des points A et B aux points de tangence T1 et T2 de l'armature (1) avec les ensembles formés des tringles (2) d'ancrage de ladite armature (1) et des couches (3) de mélange de vulcanisat, disposées autour des tringles (2) de manière à ce que les sections méridiennes des ensembles soient sensiblement circulaires, l'armature de carcasse a un profil méridien qui lui est propre et dont la courbure transversale, nettement plus grande, correspond aux flancs du pneumatique.

Cette armature de carcasse (1) est retournée dans chaque bourrelet autour de l'ensemble tringle (2) - enrobage (3) pour former les retournements (10). Les tringles (2) seront dans le moule de vulcanisation séparées par une distance axiale dite "entre tringles" ET et la longueur curviligne entre le point T₁ et l'extrémité du retournement (10) est l.

La figure 2 montre le noyau N nécessaire pour fabriquer l'ébauche toroïdale de l'armature de carcasse (1) telle que décrite ci-dessus. Ce noyau N est un tore creux métallique fermé, l'épaisseur de la paroi du tore est telle qu'il est pratiquement indéformable. Le profil méridien extérieur du noyau N, qui est avantageusement recouvert d'une couche de tissu, anticollant, est, compte tenu de l'épaisseur du tissu et de l'épaisseur de la couche de mélange de caoutchouc (4') recouvrant intérieurement les câbles de l'armature de carcasse (1) et posé sur ledit noyau, parallèle au profil méridien de ladite armature, tel que montré sur la figure 1, de la face radialement supérieure du noyau N aux points de tangence T₁, T₂ des tringles avec l'armature, les deux points T₁ et T₂ étant alors distants axialement de la quantité L égale à ET + 2λ. L'ébauche d'armature de carcasse (1) est obtenue par enroulement d'un fil ou câble autour du noyau N recouvert, le noyau reposant sur des rouleaux de support et de rotation, alors qu'un dispositif de distribution du fil ou câble permet le défilement du câble et son enroulement autour du noyau tournant à une vitesse déterminée. Un tel procédé d'enroulement et le dispositif pour sa mise en oeuvre sont connus, et l'on peut se référer par exemple au brevet français 2 052 885.

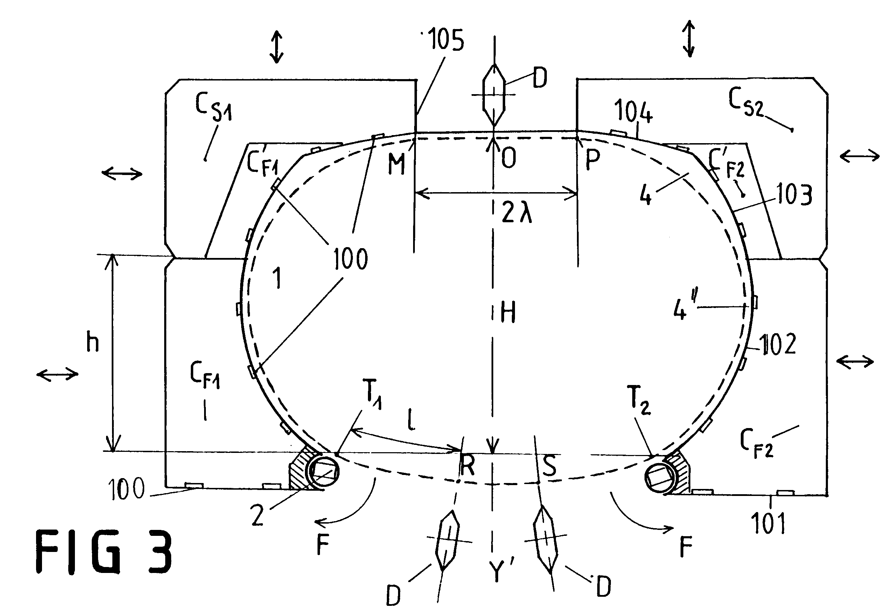

Comme montré sur la figure 3, l'ébauche toroïdale d'armature de carcasse (1) est recouverte d'une couche de mélange de caoutchouc (4'') destinée à recouvrir extérieurement les câbles de ladite armature (1), des profilés de mélange caoutchouteux (4) normalement situés entre l'armature de carcasse (1) et l'armature de sommet, ainsi que les différentes couches de mélange caoutchouteux de renfort.

L'ébauche toroïdale ainsi recouverte est alors enserrée contre le noyau N, dans ses parties flancs et dans sa partie sommet, à l'exception de la largeur 2λ autour du plan équatorial YY' (Fig. 2) par deux couronnes circulaires primaires C_{F1} et C_{F2} de flanc métalliques, lesdites couronnes étant réunies radialement à deux couronnes circulaires de flanc secondaires C'_{F1} et C'_{F2}, ces dernières étant elles-mêmes réunies à deux couronnes circulaires C_{S1} et C_{S2} de sommet, aussi métalliques.

La ligne de jonction respectivement des couronnes C_{F1} et C'_{F1} et C_{F2} et C'_{F2} est située radialement sensiblement à une distance h de la ligne fictive réunissant axialement les points de tangence T₁, T₂, h étant sensiblement égale à 0,75 H et H étant la hauteur de l'ébauche toroïdale de carcasse (1) mesurée à partir de la même ligne fictive T₁, T₂. La ligne supérieure de jonction respectivement des couronnes C'_{F1} et C_{S1} et C'_{F2} et C_{S2} est sensiblement parallèle à l'axe du noyau de confection N et située à une distance radiale dudit axe, sensiblement égale à la distance radiale séparant les points A et B, de l'armature de carcasse (1) du pneumatique dans le moule, de l'axe de rotation dudit moule.

Ces couronnes de flanc C_{F1}, C_{F2}, C'_{F1} et C'_{F2} et ces couronnes de sommet C_{S1}, C_{S2} ont des faces axialement intérieures dont les profils méridiens correspondent exactement au profil méridien de l'ébauche d'armature de carcasse (1) recouverte des différentes couches de mélanges caoutchouteux. Les couronnes de flanc C_{F1} et C_{F2} sont munies à leurs extrémités axialement et radialement intérieures de cavités circulaires, destinées à recevoir les ensembles tringles (2) - enrobages caoutchouteux (3), ces ensembles étant mis en contact avec l'armature de carcasse (1) posée sur le noyau N lors du déplacement axial des couronnes C_{F1} et C_{F2} vers le noyau N.

L'armature de carcasse (1), à l'état non vulcanisé dans l'exemple décrit, et les ensembles tringles étant fermement maintenus en place, l'armature de carcasse (1) est coupée au moyen de couteaux rotatifs (D) d'une part sur la face radialement supérieure au niveau du plan équatorial YY' du noyau, et d'autre part sur la face radialement intérieure du noyau en deux points R et S, tels que les distances T₁R et T₂S soient égales à la longeur curviligne l mesurée sur le pneumatique vulcanisé, la partie RS étant enlevée du noyau N.

La prochaine étape du procédé, conforme à l'invention consiste alors à écarter axialement les ensembles de couronnes C_{F1}, C'_{F1}, C_{S1} et C_{F2}, C'_{F2}, C_{S2}, les faces axialement et radialement intérieures (101, 102, 103, 104) desdites couronnes étant munies de ventouses de succion (100) permettant par aspiration le maintien et le transport de l'ébauche d'armature de carcasse (1), sans qu'il y ait modification du profil méridien de ladite ébauche. Les ventouses (100) sont, comme connu, reliées à une pompe à air susceptible de créer une dépression dans lesdites ventouses.

Comme indiqué par les flèches F sur la figure 3, les parties T₁R et T₂S sont ensuite retournées autour des ensembles tringles (2)-enrobages (3) pour venir se plaquer contre les faces radialement intérieures (101) des couronnes de flancs C_{F1} et C_{F2}, les retournements (10) étant aussi maintenus par aspiration.

L'écartement axial des couronnes de flanc et sommet ayant permis l'enlèvement du noyau de confection N, la finition intérieure du pneumatique, ainsi que celle des bourrelets est alors possible. C'est ainsi que sont posées les différentes couches de mélange caoutchouteux formant généralement les couches intérieures du pneumatique, telles que les couches de renfort, ou la couche de mélange imperméable à l'air dans le pneumatique sans chambre.

De même sont posées les petites nappes de renforcement, dites raidisseurs ou languettes (12) de fils ou câbles, disposées usuellement axialement à l'extérieur des retournements d'armature de carcasse dans les pneumatiques terminés, ainsi que toutes les couches de gomme (13) nécessaires à la formation des bourrelets et disposées à l'extérieur du retournement de l'armature de carcasse (1). Toutes ces couches de gomme sont avantageusement posées selon la technique décrite dans le brevet FR 2 603 841 du même déposant.

Comme on peut le voir sur la figure 3, les portions MO et OP de l'ébauche d'armature de carcasse sont, après coupure en O, non maintenues par les couronnes sommet. Ces deux portions chacune de largeur λ, vont former, au cours du rapprochement axial des couronnes le recouvrement d'armature de carcasse tel que montré sur la figure 1.

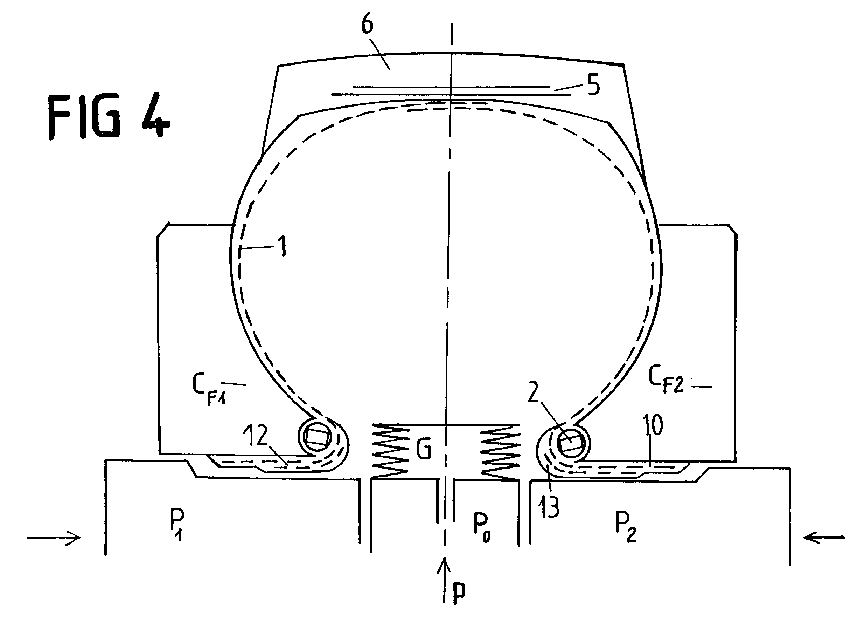

Le recouvrement étant réalisé, l'ébauche d'armature de carcasse (1) est alors mise sous pression p par l'intermédiaire d'une membrane de gonflage G, fixée sur un tambour Pₒ. Cette membrane G est avantageusement renforcée au sommet de manière à posséder la rigidité propice à la pose d'un ensemble préfabriqué et constitué de l'armature de sommet (5) et de la bande de roulement (6) après écartement axial et radial des deux couronnes de sommet C_{S1} et C_{S2} et des couronnes de flanc C'_{F1}et C'_{F2}(figure 4). Simultanément à l'écartement de C_{S1} et C_{S2}, deux tambours gonflables P₁, P₂ sont amenés axialement de part et d'autre du tambour Po, les tambours P₁ et P₂ ayant pour but de maintenir en position les ensembles formés par les tringles (2), leurs enrobages (3), les retournements (10), les renforts (12) et tous les mélanges environnants (13), maintien qui sera nécessaire pour la finition extérieure des flancs et bourrelets du pneumatique après écartement axial des couronnes de flancs C_{F1}et C_{F2}. Cette finition consiste alors à poser les couches et profilés de mélanges caoutchouteux (14, 15) localisés dans le pneumatique terminé et vulcanisé entre l'armature de carcasse (1) et le retournement (10) ainsi que les couches et profilés de mélanges (7') et nappe (5) éventuelle de renforcement (70), localisés sur les flancs de l'armature de carcasse, la finition s'achevant par la pose des profilés des couches extérieures de flancs (7'').

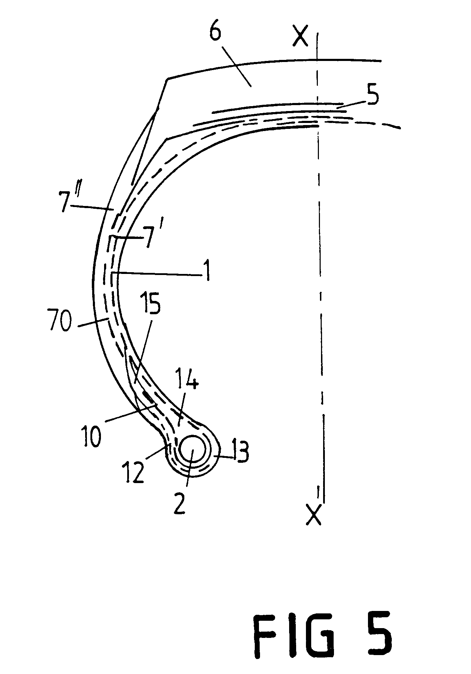

L'ébauche du pneumatique est ainsi prête à la vulcanisation (figure 5),

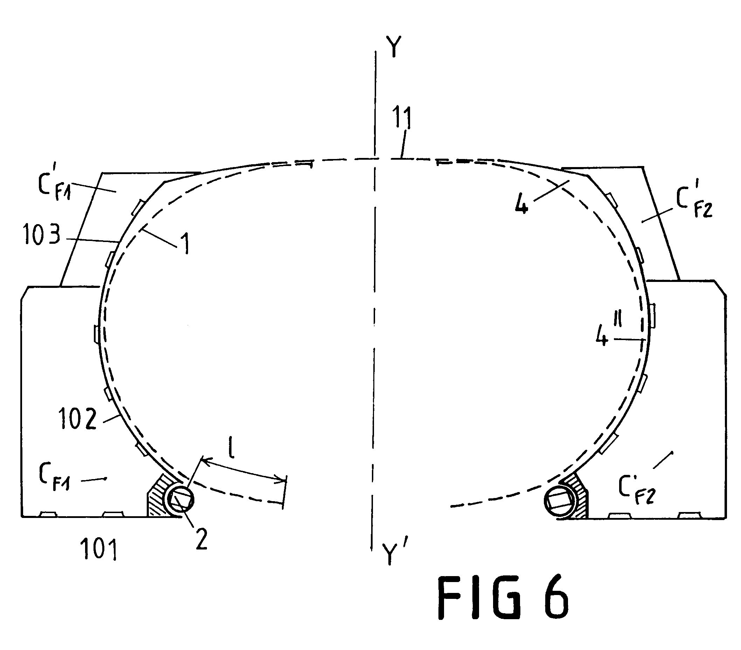

L'exemple décrit ci-dessus correspond fondamentalement à un procédé destiné à obtenir un pneumatique dont les deux moitiés d'armature de carcasse se recouvrent dans la partie supérieure. On peut parfois concevoir les dimensions du noyau comme étant imposées par la longueur de retournement (1) d'armature de carcasse autour des tringles (2), et le noyau de confection N sera tel que la distance axiale L entre les tringles posées corresponde, en fonction des courbures de la face inférieure du noyau, à la somme des longueurs l de retournement. Il est alors possible que, le pneumatique dans le moule de vulcanisation ayant une distance axiale entre tringles ET supérieure à L, l'on obtienne, après une seule coupure sur la face radialement intérieure du noyau et une seule coupure sur la face radialement extérieure du noyau, un intervalle où l'armature de carcasse est manquante. Comme montré sur la figure 6, le procédé consiste alors après écartement axial des deux moitiés d'ébauche, et enlèvement des deux coquilles sommet C_{S1} et C_{S2}, dans la pose d'une nappe de renforcement additionnelle (11) sur et entre les deux bords supérieurs de l'armature de carcasse (1).

Cette nappe additionnelle (11) peut être formée de fils ou câbles radiaux, c'est-à-dire faisant avec la direction circonférentielle un angle de 90°, ou de fils ou câbles orientés par rapport à ladite direction d'un angle compris entre 60° et 90°.

Après pose de cette nappe, il est possible, comme dans le premier exemple décrit, de compléter l'ébauche par la pose d'une armature de sommet, et d'une bande de roulement, ou de l'ensemble préfabriqué des deux éléments après écartement axiale des coquilles secondaires de flanc C'_{F1} et C'_{F2}.

## Revendications

1. Procédé de fabrication d'un pneumatique consistant en la réalisation d'une ébauche toroïdale d'armature de carcasse (1) comportant au moins une nappe, par enroulement hélicoïdal, autour d'un noyau N de confection préalablement recouvert au moins d'un mélange caoutchouteux (4'), d'un fil ou câble, suivi d'au moins une coupure circonférentielle sur la surface radialement intérieure du tore ainsi formé, et du rabattement, autour des tringles d'ancrage (2) de l'armature de carcasse (1), préalablement positionnées sur la surface du tore, des portions d'armatures obtenues de part et d'autre de la coupure, puis à terminer l'ébauche du pneumatique caractérisé en ce que l'enroulement hélicoïdal est réalisé sur un noyau N de confection monobloc, annulaire, indéformable, indémontable, et possédant une section méridienne dont le profil, au moins dans ses portions flancs entre les points de tangence aux tringles et les points de tangence à l'armature de sommet, est parallèle au profil méridien de la nappe la plus intérieure d'armature de carcasse tel qu'il est dans le moule de vulcanisation du pneumatique, les deux moitiés d'ébauche obtenues après coupure sur la surface radialement extérieure du noyau N étant séparées axialement par écartement à l'aide de moyens simultanément de préhension, de support et de manutention, ayant des parois axialement intérieures présentant, au moins dans la zone des flancs, un profil méridien identique au profil méridien de la nappe d'armature de carcasse la plus extérieure, recouverte éventuellement des couches (4 ») et profilés (4) de mélange caoutchouteux, complétant l'ébauche toroïdale, ladite séparation axiale permettant l'enlèvement du noyau et les deux moitiés d'ébauche étant postérieurement rapprochées axialement et réunies.

2. Procédé selon la revendication 1, caractérisé en ce que les deux moitiés d'ébauche sont réunies au moyen du recouvrement axial des bords supérieurs de l'armature de carcasse (1) sur une largeur axiale λ.

3. Procédé selon la revendication 1, caractérisé en ce que les deux moitiés d'ébauche sont réunies au moyen d'au moins une nappe additionnelle, formée de fils ou câbles inclinés par rapport à la direction circonférentielle de l'ébauche d'un angle α tel que 90° ≥ α ≥ 60°, et posée sur et entre les deux bords supérieurs de l'armature de carcasse.

4. Procédé selon la revendication 1, caractérisé en ce qu'on utilise comme moyens de support, de préhension et de manutention, des couronnes métalliques annulaires coaxiales, quatre de ces couronnes dites de flanc C_{F1}, C_{F2}, C'_{F1}, C'_{F2} étant destinées à la préhension et au support des flancs du tore formé sur le noyau, deux desdites couronnes de flanc C'_{F1} et C'_{F2} étant jointes radialement à l'extérieur à deux couronnes dites de sommet C_{S1}, C_{S2} destinées à la préhension et au support du sommet du tore.

5. Procédé selon la revendication 4, caractérisé en ce qu'on utilise des couronnes C_{F1}, C_{F2}, C'_{F1}, C'_{F2}, C_{S1}, C_{S2} munies de cavités d'aspiration (100) pourvues de soupapes, ces cavités ayant des lèvres en caoutchouc.

6. Procédé selon la revendication 4, caractérisé en ce que les couronnes de flanc C_{F1}, C_{F2} primaires ont leurs bases munies d'évidements destinés à recevoir les tringles d'ancrage (2) d'armature de carcasse (1), ces évidements étant munis d'aimants de maintien de la tringle (2).

7. Procédé selon l'une des revendications 4 à 6, caractérisé en ce que les moyens de support, préhension et manutention sont appliqués sur l'ébauche avant la réalisation des coupures circonférentielles.

8. Procédé selon la revendication 7, caractérisé en ce que l'application des tringles d'ancrage avec la couche de fils ou câbles enroulés autour du noyau N est réalisée simultanément à l'application des moyens de support, préhension et manutention.

9. Procédé selon la revendication 1, caractérisé en ce que l'application des couches de renfort ou profilés de mélange caoutchouteux situés à l'intérieur de l'armature de carcasse (1), et de la couche intérieure de mélange imperméable, est réalisée après écartement axial des deux moitiés de l'ébauche toroïdale de carcasse.

10. Procédé selon la revendication 1, caractérisé en ce que les rabattements des portions de l'ébauche d'armature de carcasse autour des tringles d'ancrage (2) sont réalisés après écartement axial des deux moitiés de l'ébauche, et sont maintenus sous les faces radialement intérieures (101) des couronnes de flanc C_{F1},C_{F2} par dépression à l'aide des cavités (100), de manière à pouvoir compléter la confection des bourrelets par la pose des nappes de renforcement (12) et des profilés (13) de mélange caoutchouteux disposés radialement à l'intérieur des rabattements.

11. Procédé selon l'une des revendications 1 à 10, caractérisé en ce que la finition de l'ébauche du pneumatique comporte chronologiquement les étapes suivantes :
- pose sur la partie supérieure de l'ébauche d'armature de carcasse d'un complexe préfabriqué comprenant l'armature de sommet (5) et la bande de roulement (6), après enlèvement des couronnes de sommet C_{S1} et C_{S2}, des couronnes de flanc secondaires C'_{F1} et C'_{F2}, et mise en pression p de l'ébauche,
- mise en place, sous les rabattements de portions d'ébauche d'armature destinés à former les retournements d'armature de carcasse (1) et des éléments caoutchouteux (13) ou de renfort (12) environnants, de tambours cylindriques gonflables de maintien,
- écartement axial des couronnes de flanc C_{F1}, C_{F2},
- finition des bourrelets du pneumatique par pose sur l'ébauche d'armature des profilés (14, 15) de mélanges caoutchouteux disposés dans le pneumatique entre l'armature de carcasse (1) et ses retournements (10), par retournement complet des portions rabattues,
- finition des flancs du pneumatique par pose des couches et profilés (7', 7'') de mélanges caoutchouteux disposés dans les flancs du pneumatique axialement à l'extérieur de l'armature de carcasse (1) et de(s) nappe(s) éventuelle(s) de renfort (70) de flanc.

## Claims

1. A process for the manufacture of a tyre, consisting of producing a toroidal carcass reinforcement blank (1) comprising at least one ply, by helical winding of a cord or cable around a building core N which has been previously covered with at least one rubber mix (4'), followed by at least one circumferential cut on the radially inner surface of the torus thus formed, and the folding around anchoring bead wires (2) of the carcass reinforcement (1), previously positioned on the surface of the torus, of the portions of reinforcements obtained on both sides of the cut, then completing the blank of the tyre, characterised in that the helical winding is effected on a non-deformable, non-dismantlable annular monobloc building core N having a meridian section the profile of which, at least in its sidewall portions between the points of tangency to the bead wires and the points of tangency to the crown reinforcement, is parallel to the meridian profile of the innermost carcass reinforcement ply as it is in the vulcanisation mould of the tyre, the two blank halves obtained after cutting on the radially outer surface of the core N being separated axially by moving apart by simultaneous grasping, supporting and handling means, having axially inner walls presenting, at least in the region of the sidewalls, a meridian profile identical to the meridian profile of the outermost carcass reinforcement ply, possibly covered with layers (4'') and profiles (4') of rubber mix, completing the toroidal blank, said axial separation permitting the removal of the core, and the two blank halves being then brought axially towards each other and connected.

2. A process according to Claim 1, characterised in that the two blank halves are connected by means of axial overlapping of the upper edges of the carcass reinforcement (1) over an axial width λ.

3. A process according to Claim 1, characterised in that the two blank halves are connected by means of at least one additional ply, formed of cords or cables inclined with respect to the circumferential direction of the blank by an angle α such that 90° ≥ α ≥ 60°, and laid on and between the two upper edges of the carcass reinforcement.

4. A process according to Claim 1, characterised in that coaxial annular metal rings are used as support, grasping and handling means, four of these rings, referred to as sidewall rings C_{F1}, C_{F2}, C'_{F1}, C'_{F2} being intended for the grasping and support of the sidewalls of the torus formed on the core, two of said sidewall rings C'_{F1} and C'_{F2} being joined radially to the outside to two so-called crown rings C_{S1}, C_{S2} intended for the grasping and support of the crown of the torus.

5. A process according to Claim 4, characterised in that rings C_{F1}, C_{F2}, C'_{F1}, C'_{F2}, C_{S1}, C_{S2} are used which are provided with suction cavities (100) having valves, these cavities having rubber lips.

6. A process according to Claim 4, characterised in that the primary sidewall rings C_{F1}, C_{F2} have their bases provided with recesses intended to receive the bead wires (2) for the anchoring of the carcass reinforcement (1), these recesses being provided with magnets for the holding of the bead wire (2).

7. A process according to one of Claims 4 to 6, characterised in that the support, grasping and handling means are applied to the blank before the effecting of the circumferential cuts.

8. A process according to Claim 7, characterised in that the application of the anchoring bead wires with the layer of cords or cables wound around the core N is effected simultaneously with the application of the support, grasping and handling means.

9. A process according to Claim 1, characterised in that the application of the reinforcement layers or profiles of rubber mix which are located to the inside of the carcass reinforcement (1) and of the impermeable inner layer of mix is effected after the axial moving apart of the two halves of the toroidal carcass blank.

10. A process according to Claim 1, characterised in that the folding of the portions of the carcass reinforcement blank around the anchoring bead wires (2) is effected after axial moving apart of the two halves of the blank and are held below the radially inner faces (101) of the sidewall rings C_{F1}, C_{F2} by vacuum by means of the cavities (100) so as to be able to complete the building of the beads by the laying of the reinforcement plies (12) and profiles (13) of rubber mix which are arranged radially to the inside of the folding.

11. A process according to one of Claims 1 to 10, characterised in that the finishing of the tyre blank comprises, in chronological order, the following steps:
- laying on the upper part of the carcass reinforcement blank of a prefabricated complex comprising the crown reinforcement (5) and the tread (6), after removal of the tread rings CS₁ and C_{S2}, the secondary sidewall rings C'_{F1} and C'_{F2}, and the placing of the blank under pressure p;
- putting in place, below the folds of portions of reinforcement blank which are intended to form the carcass reinforcement turn-ups (1) and surrounding reinforcement (12) or rubber (13) elements, of cylindrical inflatable holding drums;
- axial moving apart of the sidewall rings C_{F1}, C_{F2};
- finishing of the beads of the tyre by the laying on the reinforcement blank of the profiles (14, 15) of rubber mixes arranged in the tyre between the carcass reinforcement (1) and its turn-ups (10), by complete turning-up of the folded portions;
- finishing of the sidewalls of the tyre by the laying of the layers and profiles (7', 7'') of rubber mixes arranged in the sidewalls of the tyre axially to the outside of the carcass reinforcement (1) and of any sidewall reinforcement ply (plies) (70).

## Patentansprüche

1. Herstellungsverfahren für einen Reifen, das aus der Herstellung eines torusförmigen Karkassenbewehrungsrohlings (1) besteht, der mindestens eine Schicht aufweist, die durch wendelförmiges Umwickeln eines Konfektionierungskernes N, der vorher mit mindestens einer gummiartigen Mischung (4') abgedeckt ist, mit einem Draht bzw. Faden oder Seil gebildet ist, gefolgt von mindestens einem Umfangsschnitt auf der radial inneren Fläche des so geformten Torus und vom Umschlagen rund um Wulstkerne (2) der Karkassenbewehrung (1), die vorher auf der Oberfläche des Torus angeordnet sind, von Bewehrungsabschnitten, die beiderseits des Schnitts erhalten wurden, und dann vom Fertigstellen des Rohlings des Reifens, dadurch **gekennzeichnet**, daß das wendelförmige Umwickeln auf einem einstückigen, ringförmigen, unverformbaren, unzerlegbaren Konfektionierungskern N durchgeführt wird, der einen Meridianschnitt aufweist, dessen Profil mindestens in seinen Flankenbereichen zwischen den Tangentenpunkten an den Wulstkernen und den Tangentenpunkten an der Scheitelbewehrung parallel ist zum Meridiaprofil der am weitesten innenliegenden Schicht der Karkasenbewehrung, so, wie sie sich in der Vulkanisierungsform des Reifens befindet, wobei die beiden Hälften des Rohlings, die nach dem Schnitt auf der radial außenliegenden Fläche des Kernes N erhalten wurden, axial durch Auseinanderbewegen mit Mitteln getrennt werden, die gleichzeitig dem Greifen, der Halterung und dem Transport dienen und axial innenliegende Wände aufweisen, die mindestens im Bereich der Flanken ein Meridianprofil aufweisen, das identisch ist mit dem Meridianprofil der am weitesten außenliegenden Schicht der Karkassenbewehrung, die gegebenenfalls mit Lagen (4'') und Profilen (4) aus kautschukartiger Mischung abgedeckt ist, was den torusförmigen Rohling fertigstellt, wobei die genannte axiale Trennung das Entfernen des Kernes gestattet, und die beiden Hälften des Rohlings nachher axial aneinander angenähert und miteinander vereinigt werden.

2. Verfahren nach Anspruch 1, dadurch **gekennzeichnet**, daß die beiden Hälften des Rohlings mittels der axialen Überdeckung der oberen Ränder der Karkassenbewehrung (1) über eine axiale Länge λ hinweg vereint sind.

3. Verfahren nach Anspruch 1, dadurch **gekennzeichnet**, daß die beiden Hälften des Rohlings mittels mindestens einer zusätzlichen Schicht vereint sind, die aus Fäden bzw. Drähten oder Seilen gebildet ist, die in bezug auf die Umfangsrichtung des Rohlings um einen Winkel α, wie 90° ≥ α ≥ 60° geneigt sind und auf den beiden oberen Rändern der Karkassenbewehrung sowie zwischen diesen aufgelegt sind.

4. Verfahren nach Anspruch 1, dadurch **gekennzeichnet**, daß man als Mittel zum Tragen, Greifen und Fördern ringförmige, koaxiale Kränze aus Metall benutzt, wobei vier dieser Kränze, die Flankenkränze C_{F1}, C_{F2}, C'_{F1}, C'_{F2} genannt sind, zum Greifen und Tragen der Flanken des Torus bestimmt sind, der auf dem Kern gebildet ist, und zwei der genannten Flankenkränze C'_{F1} und C'_{F2} radial an der Außenseite zweier Kränze angefügt sind, die Scheitelkränze C_{S1}, C_{S2} genannt sind und zum Ergreifen und Tragen des Scheitels des Torus bestimmt sind.

5. Verfahren nach Anspruch 4, dadurch **gekennzeichnet**, daß man Kränze C_{F1}, C_{F2}, C'_{F1}, C'_{F2}, C_{S1}, C_{S2} benutzt, die mit Ansaug-Vertiefungen (100) ausgestattet sind, die mit Ventilen versehen sind, wobei diese Vertiefungen Lippen aus Kautschuk bzw. Gummi aufweisen.

6. Verfahren nach Anspruch 4, dadurch **gekennzeichnet**, daß die Haupt-Flankenkränze C_{F1}, C_{F2} an ihren Unterseiten mit Aussparungen versehen sind, die dazu bestimmt sind, Verankerungs-Wulstkerne (2) für die Karkassenbewehrung (1) aufzunehmen, wobei diese Aussparungen mit Magneten zur Halterung des Wulstkerns (2) ausgestattet sind.

7. Verfahren nach einem der Ansprüche 4 bis 6, dadurch **gekennzeichnet**, daß die Mittel zum Tragen, Ergreifen und Fördern auf dem Rohling vor der Durchführung der Umfangsschnitte aufgebracht werden.

8. Verfahren nach Anspruch 7, dadurch **gekennzeichnet**, daß die Abdeckung der Verankerungs-Wulstkerne mit der Lage aus Drähten bzw. Fäden oder Seilen, die rund um den Kern N herumgewickelt sind, gleichzeitig mit der Aufbringung der Mittel zum Tragen, Greifen und Fördern erfolgt.

9. Verfahren nach Anspruch 1, dadurch **gekennzeichnet**, daß die Aufbringung der Verstärkungslagen oder Profile aus gummiartiger Mischung, die auf der Innenseite der Karkassenbewehrung (1) sitzen, und der Innenlage aus undurchlässiger Mischung nach dem axialen Auseinanderbewegen der beiden Hälften des torusförmigen Karkassenrohlings durchgeführt wird.

10. Verfahren nach Anspruch 1, dadurch **gekennzeichnet**, daß die Umschläge der Abschnitte des Karkassenbewehrungsrohlings rund um Verankerungswulstkerne (2) nach dem axialen Auseinanderbewegen der beiden Hälften des Rohlings hergestellt werden und unter den radial inneren Flächen (101) der Flankenkränze C_{F1}, C_{F2} durch Unterdruck mit Hilfe der Aussparungen (100) derart gehalten werden, daß man die Konfektionierung der Wülste durch das Auflegen von Verstärkungsschichten (12) und Profilen (13) aus gummiartiger Mischung fertigstellen kann, die radial im Inneren der Umschläge angeordnet sind.

11. Verfahren nach einem der Ansprüche 1 bis 10, dadurch **gekennzeichnet**, daß die Fertigstellung des Reifenrohlings chronologisch die folgenden Schritte aufweist:
- Auflegen eines Verbundstückes auf den oberen Teil des Karkassenbewehrungsrohlings, das vorgefertigt ist und die Scheitelbewehrung (5) und das Laufflächenband (6) aufweist, nach dem Abheben der Scheitelkränze C_{S1} und C_{S2}, der Neben-Flankenkränze C'_{F1} und C'_{F2} und nach der Beaufschlagung des Rohlings mit einem Druck p,
- Anordnen von zylindrischen, aufpumpbaren Haltetrommeln unter den Umschlägen von Abschnitten des Bewehrungsrohlings, die dazu bestimmt sind, die Umkehrungen der Karkassenbewehrung (1) zu bilden, und von benachbarten gummiartigen Elementen (13) oder Verstärkungselementen (12),
- axiales Auseinanderfahren der Flankenkränze C_{F1}, C_{F2},
- Fertigstellen der Wülste des Reifens durch Auflegen von Profilen (14, 15) aus gummiartigen Mischungen auf den Bewehrungsrohling, die im Reifen zwischen der Karkassenbewehrung (1) und seinen Umkehrungen (10) angeordnet sind, durch vollständiges Herumkehren der zurückgeschlagenen Abschnitte; und
- Fertigstellen der Flanken des Reifens durch Auflegen der Lagen und Profile (7', 7'') aus gummiartigen Mischungen, die in den Flanken des Reifens axial außerhalb der Karkassenbewehrung (1) und der möglichen Flankenverstärkung(en) (70) angeordnet sind.
